## Europäisches Patentamt
## European Patent Office
## Office européen des brevets

(19)

(11) Numéro de publication: **0 094 881**
**B1**

(12)

# FASCICULE DE BREVET EUROPÉEN

(45) Date de publication du fascicule du brevet:
**13.08.86**

(51) Int. Cl.⁴: **B 23 D 55/00,** B 23 D 55/10

(21) Numéro de dépôt: **83400964.9**

(22) Date de dépôt: **11.05.83**

(54) Scie à ruban et boîtier supportant la lame d'une telle scie.

(30) Priorité: **18.05.82 FR 8208702**

(43) Date de publication de la demande:
**23.11.83 Bulletin 83/47**

(45) Mention de la délivrance du brevet:
**13.08.86 Bulletin 86/33**

(84) Etats contractants désignés:
**BE DE GB SE**

(56) Documents cité:
**FR-A-1 114 511**
**FR-A-2 339 461**
**GB-A-1 023 455**
**GB-A-1 437 556**
**GB-A-1 445 819**
**US-A-1 372 903**
**US-A-2 472 509**

(73) Titulaire: **COMMISSARIAT A L'ENERGIE ATOMIQUE Etablissement de Caractère Scientifique Technique et Industriel, 31/33, rue de la Fédération, F-75015 Paris (FR)**

(72) Inventeur: **Fiori, Robert, Saint Laurent La Vernede, F-30200 Connaux (FR)**
Inventeur: **Seyfried, Philippe, 2, rue Francois Mauriac, F-30200 Bagnols Sur Ceze (FR)**
Inventeur: **Symard, José, Orsan, F-30200 Bagnols Sur Ceze (FR)**

(74) Mandataire: **Mongrédien, André, c/o BREVATOME 25, rue de Ponthieu, F-75008 Paris (FR)**

LIBER, STOCKHOLM 1986

## Description

La présente invention se rapporte à une scie à ruban du type comprenant une platine supportant la pièce à scier, une lame de scie fermée définissant un plan de coupe et supportée par au moins deux roues dont une roue menante entraînée en rotation par des moyens de commande, des moyens pour déplacer la lame de scie par rapport à la pièce à scier dans le plan de coupe et des moyens de tension de la lame permettant de déplacer au moins l'une desdites roues entre une position de tension et une position d'intervention (voir FR—A—2 339 461).

La présente invention se rapporte également à un ensemble prévu pour être utilisé dans une scie à ruban.

Dans une scie à ruban de ce type, on comprend que la durée de vie de la lame de scie est très faible par rapport à celle des éléments constitutifs de la scie. En particulier, la durée de vie de la lame est généralement limitée par l'usure de sa denture et, de façon plus rare, par la rupture de la lame.

Lorsque la lame doit être changée par suite de l'usure de la denture, il est généralement nécessaire de la couper pour la démonter, avant que la scie ne soit déséquipée d'une lame neuve qui doit à son tour être soudée sur place. Ces opérations se caractérisent par un temps d'intervention relativement long avant que la scie ne soit remise en état de marche. Ce temps d'intervention se trouve encore sensiblement accru lorsque la scie fonctionne en milieu hostile, puisqu'il est alors nécessaire d'effectuer ces différentes opérations à distance, à l'aide de machines de manutention appropriées. Dans ce cas, le temps d'intervention nécessaire au remplacement de la lame de scie est d'autant plus gênant que la scie peut constituer l'un des postes d'une chaîne et qu'il est alors nécessaire d'arrêter toute la chaîne.

D'autre part, le second type d'événements pouvant conduire à la nécessité de remplacer la lame de scie, qui est, comme on l'a vu, la rupture de cette lame, présente dans les scies à ruban de la technique antérieure l'inconvénient majeur de constituer un danger à la fois pour les personnes et pour les appareils pouvant se trouver à proximité de la scie. Dans le cas où la scie se trouve en milieu hostile, ces appareils peuvent notamment être des appareils de manutention à distance et on conçoit que les dommages qu'ils peuvent subir à la suite d'une rupture de lame peuvent nécessiter des interventions particulièrement longues et délicates.

L'invention a précisément pour objet une scie à ruban du type défini précédemment, ne présentant pas les inconvénients des scies de la technique antérieure et permettant notamment un remplacement rapide de la lame de scie en cas d'usure ou de rupture de celle-ci, tout en empêchant que la lame puisse endommager des appareils ou blesser des personnes lorsqu'elle se rompt.

A cet effet et conformément à l'invention, il est proposé une scie à ruban du type défini précédemment, cette scie étant caractérisée en ce qu'elle comprend de plus un boîtier amovible dans lequel est logée ladite lame, le boîtier et la lame qu'il contient constituant un ensemble pouvant être changé d'un bloc sans aucun autre démontage lorsque les moyens de tension maintiennent ladite roue en position d'intervention.

De préférence, le boîtier comporte des moyens de retenue de la lame, contre lesquels cette dernière est sollicitée élastiquement lorsque la roue occupe la position d'intervention, la lame étant maintenue écartée de ces moyens de retenue lorsque ladite roue occupe la position de tension. Le boîtier peut alors comporter une plaque située du côté de la lame opposée à la denture de celle-ci, lesdits moyens de retenue comprenant des pattes qui font saillie à partir de la plaque, à l'extérieur de la lame de scie, et audelà de la denture de celle-ci, lesdites pattes comportant des extrémités recourbées vers l'intérieur jusqu'en regard de ladite denture.

Selon un mode de réalisation préféré de l'invention, les roues, les moyens de commande ainsi que l'ensemble constitué par le boîtier et par la lame sont portés par un bras monté pivotant sur un châssis portant la platine, autour d'un axe perpendiculaire au plan de coupe et décalé par rapport à la pièce à scier, et les moyens pour déplacer la lame de scie par rapport à la pièce à scier agissent entre le bras et le châssis pour commander la rotation du bras autour dudit axe. De préférence, les moyens pour déplacer la lame de scie par rapport à la pièce à scier sont alors démontables et la scie comprend une béquille apte à supporter le bras pivotant lors du démontage de ces moyens.

Selon une autre caractéristique de ce mode de réalisation, le châssis comporte une partie fixe comprenant des rails s'étendant selon une direction perpendiculaire au plan de coupe, une partie mobile comprenant des galets roulant sur ces rails, cette partie mobile du châssis portant les roues, les moyens de commande, l'ensemble constitué par le boîtier et la lame ainsi que les moyens pour déplacer la lame de scie par rapport à la pièce à scier, et des moyens de translation de la partie mobile le long des rails de la partie fixe. Des moyens anti-basculeurs amovibles peuvent alors être prévus entre les parties fixe et mobile du châssis pour interdire normalement tout déplacement de la partie mobile en éloignement des rails.

Conformément à une autre caractéristique de l'invention, la scie comprend de plus des moyens d'ablocage de la pièce à scier, aptes à maintenir cette dernière en appui contre ladite platine, ces moyens d'ablocage comportant une partie interchangeable adaptée à la géométrie de la pièce à scier.

L'invention a également pour objet un ensemble prévu pour être utilisé dans une scie à ruban conforme à l'invention, cet ensemble étant caractérisé en ce qu'il comprend une lame de scie fermée et un boîtier dans lequel est logée ladite lame, ce boîtier comprenant des moyens de retenue de la lame contre lesquels cette dernière est sollicitée élastiquement en l'absence d'une tension de la lame, ces moyens de retenue étant tels que la lame puisse en être écartée lorsqu'elle est mise sous tension.

On décrira maintenant, à titre d'exemple non limitatif, un mode de réalisation préféré de l'invention en se référant aux dessins annexés dans lesquels:

—la figure 1 est une vue schématique, en élévation, d'une scie à ruban réalisée conformément à l'invention;

—la figure 2 est une vue en coupe à plus grande échelle selon la ligne II—II de la figure 1;

—la figure 3 est une vue en perspective illustrant le montage de l'ensemble constitué par la lame de la scie et par le boîtier qui la supporte sur la partie supérieure de la scie à ruban représentée sur les figures 1 et 2;

Les figures 4a et 4b sont des vues en perspective montrant, en a les moyens de liaison démontables à distance associés au corps et à la tige du vérin commandant le déplacement de la lame de scie dans le plan de coupe et, en b le démontage des moyens de liaison associés à la tige du vérin;

—les figures 5a et 5b sont des vues schématiques représentant les moyens d'ablocage de la pièce à scier, respectivement en position de démontage et en position de blocage de cette pièce;

—la figure 6 est une vue en coupe transversale des moyens d'ablocage selon la ligne VI—VI de la figure 5b;

—la figure 7 est une vue en perspective des moyens permettant de maintenir les galets de la partie mobile du châssis de la scie représentée sur les figures 1 et 2, lorsqu'on souhaite remplacer cette partie mobile et les organes qu'elle supporte; et

—la figure 8 est une vue de côté, à plus grande échelle des moyens de maintien représentés sur la figure 7.

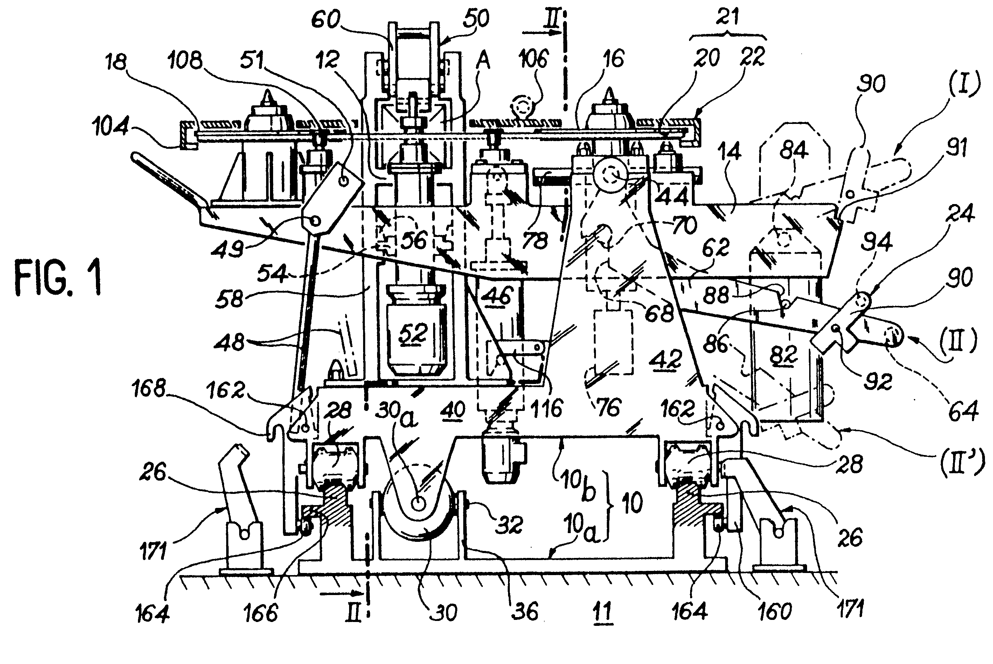

Comme l'illustre en particulier la figure 1, la scie à ruban selon l'invention comprend un châssis 10 comportant une partie fixe 10a qui repose sur le sol 11. Ce dernier peut notamment être le sol d'une cellule de confinement, dans le cas où la scie est utilisée en milieu hostile. Les pièces à scier A sont introduites perpendiculairement au plan de la figure 1, et celle-ci est donc parallèle au plan de coupe vertical de la scie, défini comme on le verra ultérieurement par une partie sensiblement rectiligne d'une lame de scie 20 formant une boucle fermée dans un plan perpendiculaire à celui de la figure.

Le châssis 10 comporte également une partie mobile 10b qui supporte de façon fixe une platine 12 sur laquelle repose la pièce A à scier et des moyens d'ablocage 50 de cette pièce. In partie mobile 10b supporte également un bras oscillant 14 portant la lame de scie 20 par l'intermédiaire d'une roue ou poulie menante 16, à axe vertical, et d'une roue ou poulie menée 18, à axe vertical, disposées toutes deux dans un même plan horizontal à la partie supérieure de la scie. Conformément à l'invention, la lame de scie 20 est montée dans un boîtier 22 et on prévoit des moyens de tension 24 de cette lame de scie.

De façon plaus précise, la partie fixe 10a du châssis repose sur le sol 11 par une plaque horizontale qui supporte deux rails parallèles 26 perpendiculaires au plan de coupe. La partie mobile 10b comporte une plaque horizontale 40 sous laquelle sont montées deux paires de roues ou galets 28 qui roulent deux à deux sur les rails 26. Les axes de ces galets sont reçus dans des encoches 170 ouvertes vers le bas. Lorsqu'on scie une série de pièces A de même longueur, la partie 10b est maintenue immobile par rapport à la partie 10a, à l'aide de moyens de blocage d'une type connu (non représentés). En revanche, lorsqu'on désire changer la position du plan de coupe, par exemple pour passer d'un type de pièces à un autre, il est nécessaire de déplacer la partie mobile 10b.

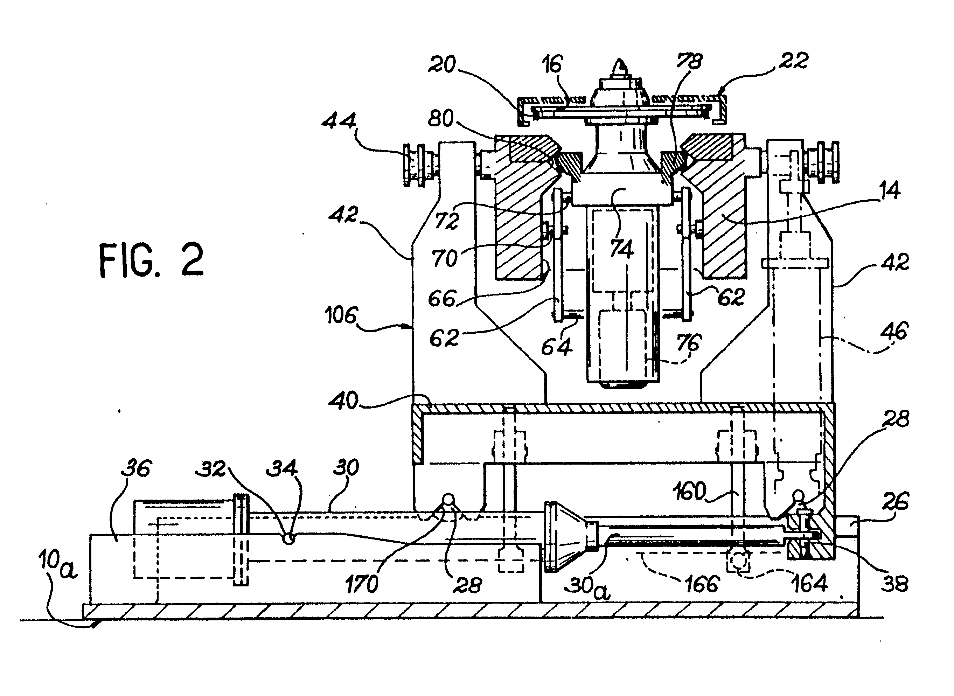

A cet effet, et comme l'illustre en particulier la figure 2, on utilise un vérin 30 dont le corps repose par gravité sur la partie fixe 10a par l'intermédiaire de deux tiges radiales 32 reçues dans des encoches 34 ouvertes vers le haut, formées dans deux plaques verticales 36 solidaires de la partie fixe 10a du châssis. La tige 30a du vérin 30 est disposée horizontalement selon une direction parallèle à la direction définie par les rails 26 et elle est fixée par son extrémité à la partie mobile 10b du châssis, par exemple au moyen d'une goupille 38.

Afin d'empêcher que la partie mobile 10b se déplace accidentellement vers le haut, on voit sur la figure 1 que des dispositifs anti-basculeurs 160 sont montés pivotants par des axes 162 sur la plaque 40. Ces dispositifs 160 portent à leur extrémité inférieure des galets 164 qui viennent en appui contre des surfaces de roulement horizontales 166 tournées vers le bas, formées sur les rails 26. Le basculement des dispositifs 160 autour des axes 162 peut être commandé à distance par des crochets 168.

Comme on le voit sur les figures 1 et 2, la partie mobile 10b comporte deux bras 42 qui font saillie verticalement vers le haut à partir de la plaque horizontale 40. A leur extrémité supérieure, ces deux bras 42 portent le bras oscillant 14 de façon pivotante autour d'un axe horizontal 44 perpendiculaire au plan de coupe et décalé par rapport à la platine 12 supportant la pièce A à scier. Le bras 14 est sensiblement horizontal et porte la roue menante 16 à la verticale de l'axe 44 et la roue menée 18 au niveau de son extrémité opposée. Cette dernière extrémité porte également, pour des raisons de manutention apparaîtront ultérieurement, un anneau de relevage.

Le pivotement du bras 14 autour de l'axe 44 est commandé par un vérin 46 dont le corps est solidarisé de la partie mobile 10b du châssis et dont la tige s'étend vers le haut selon une direction sensiblement verticale pour être solidarisée par son extrémité au bras 14. Bien entendu, l'axe du vérin 46 est décalé par rapport au plan vertical contenant l'axe de pivotement 44 du bras 14, et se truve situé dans la variante représentée entre ce plan vertical et la platine 12.

Comme on le verra ultérieurement, le vérin 46 est démontable et il est donc nécessaire de prévoir un moyen pour empêcher la rotation du support 14 autour de son axe 44 lors d'une intervention sur ce vérin. A cet effet, on voit sur la figure 1 qu'il est prévu à proximité de l'extrémité du bras 14 portant l'anneau de relevage une béquille 48 montée pivotante sur le bras autour d'un axe 49. Cette béquille est pourvue d'une barre de manoeuvre 51 permettant de la faire pivoter pour l'amener dans la position représentée en traits mixtes sur la figure 1, lorsque le bras 14 est levé en agissant sur l'anneau, après que le vérin 46 ai été démonté. Celui-ci peut alors être remplacé sand difficulté sans qu'il soit nécessaire de maintenir le bras 14 à l'aide d'un moyen de levage extérieur.

On voit aussi sur la figure 1 que les moyens d'ablocage 50 permettant de maintenir la pièce A à scier en appui sur la platine 12 comprennent un vérin de commande démontable 52. Le corps de ce vérin est muni de tiges radiales 54 reçues dans des encoches ouvertes vers le haut 56 formées dans des bras 58 qui s'étendent verticalement vers le haut à partir de la plaque 40 et supportant par ailleurs la platine 12. La tige du vérin 52 s'étend verticalement vers le haut à partir de ce dernier et agit sur la pièce A par l'intermédiaire d'une partie interchangeable 60 qui sera décrite plus en détails ultérieurement.

Conformément à l'invention, on a vu qu'il est prévu des moyens de tension 24 de la bande 20 assurant à la fois la tension de la bande lorsque la scie est en fonctionnement et le démontage de cette bande, comme on le verra ultérieurement.

Comme l'illustrent notamment les figures 1 et 2, ces moyens de tension 24 comprennent deux flasques 62, en forme de leviers, reliés à une extrémité par une entretoise 64 servant à en assurer la manutention à distance. Les flasques 62 sont disposés à l'intérieur d'un évidement 66 formé dans le bras 14, et ils sont montés pivotants sur ce dernier par l'intermédiaire de deux axes alignés 70 disposés à proximité du plan vertical contenant l'axe de pivotement 44 du bras 14. L'axe de pivotement défini par les axes 70 est parallèle à l'axe 44 et situé en-dessous de celui-ci. En outre, les flasques 62 sont disposés de telle sorte que l'entretoise 64 soit située du côté opposé à celui de la poulie menée, par rapport aux axes 44 et 70. Pour permettre leur montage et leur démontage à distance, on voit sur la figure 1 que les flasques 62 comportent sur leurs bords inférieurs une encoche 68 ouverte vers le bas, dans laquelle pénètrent les axes 70.

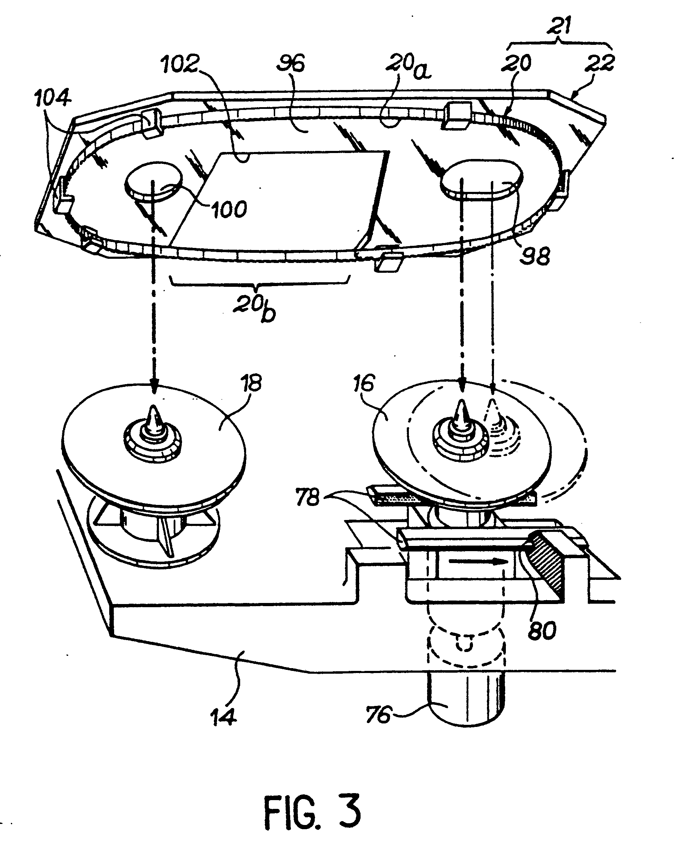

On voit sur la figure 2 que les flasques 62 sont également articulés par des axes alignés 72 sur une pièce 74 supportant la roue menante 16 et le moteur 76 commandant sa rotation. Les axes 72 sont parallèles aux axes 70 et 44 et ils sont situés à proximité de ce dernier. Comme l'illustrent notamment les figures 2 et 3, la pièce 74 comporte deux coulisses horizontales 78 qui s'étendent perpendiculairement à l'axe 44, c'est-à-dire selon une direction parallèle au plan de coupe défini par la partie rectiligne 20b de la lame de scie 20. Les coulisses 78 définissent sur leurs faces opposées des surfaces de coulissement en forme de V qui sont reçues dans des rainures complémentaires 80 formées dans le support 14. Cette configuration permet à l'ensemble formé par la pièce 74, la poulie 16 et le moteur 76 de se déplacer parallèlement au plan de coupe défini par la partie 20b de la lame 20, entre une position de tension de cette denière et une position d'intervention représentées respectivement en traits mixtes et en traits pleins sur cette même figure. La position d'intervention autorise conformément à l'invention, et comme l'illustre également cette figure 3, le changement de l'ensemble 21 constitué par la lame 20 et par le boîtier 22 qui sera décrit plus en détails ultérieurement.

On comprend que ce déplacement de la poulie 16 est obtenu en agissant sur l'entretoise 64 reliant les flasques 62, pour les faire pivoter autour des axes 70. Ce pivotement permet aux flasques 62, comme l'illustre la figure 1, de se déplacer entre une position (I), correspondant à la position d'intervention pour la poulie 16, et une position (II) correspondant à la tension de la lame 20. On a représenté sur la figure 1 deux positions (II) et (II') correspondant à deux lames de scie 20 de longueur différente.

La tension de la lame dans la position (II) ou (II') est obtenue au moyen d'un contrepoids 82 reposant sur les flasques 62 à proximité de leur extrémité portant l'entretoise 64. Ce contrepoids est interchangeable, et il comprend à cet effet une tige horizontale de manutention 84. De plus, il repose sur les flasques 62 par des tiges radiales 86 qui viennent prendre appui sur des encoches 88 ouvertes vers le haut, formées dans le bord supérieur des flasques 62. Il est à noter que le contrepoids 82 assure également l'équilibrage du bras oscillant 14, ce qui permet de réduire très sensiblement les efforts qui doivent lui être appliqués par le vérin 46, ainsi que la charge supportée par la béquille 48 en cas d'intervention sur ce dernier.

Bien entendu, des moyens doivent être prévus pour maintenir les flasques 62 dans la position (I) correspondant à la position intervention pour la roue menante 16, compte tenu de l'action du contrepoids 82 qui tend à ramener ces flasques vers la position (II) ou (II'). Ces moyens sont constitués par une tringlerie 90 articulée autour d'un axe 92 sur les flasques 62 et munie d'un bras de manutention 94. Dans la position (I) sur la figure 1, on voit que le bas de la tringlerie 90 vient en appui sur une butée 91 formée à l'extrémité du bras 14 et sur le bord supérieur de celui-ci, de telle sorte que les flasques 62 sont verrouillés dans cette position.

Dans une variante de réalisation non représentée, le contrepoids de tension 82 pourrait être remplacé par un vérin agissant entre les flasques 62 et le bras oscillant 14.

Lorsqu'on désire détendre la lame 20, on agit sur l'entretoise 64 reliant les flasques 62 afin de les faire pivoter autour de l'axe 70, ce qui a pour effet de faire coulisser l'ensemble constitué par la pièce 74, le moteur 76 la poulie 16 vers la gauche en considérant la figure 1. La tringlerie 90 verrouille alors les flasques 62 dans la position (I), pour laquelle la poulie 16 occupe la position d'intervention représentée en traits pleins sur la figure 3, dans laquelle l'ensemble 21 selon l'invention peut être changé.

Si l'on se réfère maintenant à la figure 3, on voit que la lame de scie 20 forme dans un plan horizontal, une boucle fermée, le plat de la lame étant disposé verticalement de telle sorte que la denture 20a soit tournée vers le bas. De plus, le boîtier 22 comporte, dans la variante représentée, une plaque sensiblement plane 96 prévue pour être disposée horizontalement à la partie supérieure de la scie, au-dessus des roues 16 et 18 supportant la lame 20, c'est-à-dire du côté de cette dernière opposé à la denture 20a. La plaque 96 présente une forme sensiblement rectangulaire dont la largeur est légèrement supérieure au diamètre des roues 16 et 18 et dont la longueur est telle qu'elle s'étend d'une roue à l'autre et légèrement au-delà de chacune des roues. Comme l'illustre la figure 3, la plaquette rectangulaire 96 peut présenter des coins coupés et elle comporte un premier trou 98 livrant passage à l'axe de la poulie 16 et un deuxième trou 100 livrant passage à l'axe de la poulie 18. Le trou 98 présente une forme oblongue afin de permettre à la poulie 16 de se déplacer entre ses deux positions extrêmes sous l'action des moyens de tension 24 décrits précédemment. En revanche, le trou 100 est circulaire puisque l'axe de la roue 18 est fixe. La plaque 96 présente en outre une échancrure 102 livrant passage, comme l'illustre la figure 1, aux bras 58 supportant la platine 12 et les moyens d'ablocage 50.

Afin de solidariser la lame de scie 20 du boîtier 22 lorsque la lame doit être changée, le boîtier 22 comprend en outre des moyens de retenue constitués par des pattes 104 qui sont disposées à proximité immédiate de la lame de scie 20 à l'extérieur de la boucle fermée définie par celle-ci. Les pattes 104 font saillie verticalement vers le bas à partir de la plaque 96, comme le montrent les figures 1 à 3. De façon plus précise, les pattes 104 se prolongent vers le bas audelà de la denture 20a formée à l'extrémité inférieure de la lame 20, et leur extrémité se termine par une partie repliée vers l'intérieur jusqu'en regard de cette denture 20a.

La boucle fermée formée par la lame de scie 20 comporte deux parties en arc de cercle aptes à venir respectivement sur la roue menante 16 et sur la roue menée 18 et deux parties sensiblement rectilignes reliant ces parties en arc de cercle et dont l'une, 20b, définit le plan de coupe vertical de la scie. Si l'on tient compte du fait que la lame de scie 20 se comporte sensiblement commen une lame de ressort tendant à prendre une forme circulaire, on comprend que les pattes 104 peuvent être disposées de telle sorte que la lame de scie 20 en soit écartée lorsqu'elle est montée sur la scie et lorsqu'elle est tendue sous l'action des moyens 24. En revanche, la lame 20 vient en contact avec au moins certaines des pattes de retenue 104 dès que la poulie menante 16 est amenée en position d'intervention relâchant la tension de la lame sous l'action des moyens 24.

Grâce à cette caractéristique, il n'existe aucun contact entre la lame 20 et le boîtier 22 lors du fonctionnement normal de la scie, ce qui permet d'éviter toute usure prématurée de la lame. Au contraire, dès que lame 20 est détendue, elle vient en contact avec les pattes de retenue 104, de telle sorte que l'ensemble 21 qu'elle constitue avec le boîtier 22 peut alors être changé à volonté. A cet effet, il est important de remarquer que la scie est conçue de telle sorte que l'ensemble 21 peut être monté et démonté dès que la poulie 16 est en position d'intervention, sans qu'il soit nécessaire de démonter aucun autre organe de la scie. Afin de permettre la manipulation à distance de l'ensemble 21, on peut prévoir sur la plaque 96 des moyens de préhension tels qu'un anneau 106 (figure 1). Conformément à l'invention, il est donc possible de changer très rapidement et très facilement la lame de scie en changeant l'ensemble 21. De ce point de vue, il faut remarquer que la lame 20 reste dans le boîtier 22, même lorsqu'elle se rompt.

On voit sur la figure 1 que la partie rectiligne 20b de la lame de scie 20 servant à scier les pièces A peut être positionnée avec précision par des galets guide-lame 108 montés à cet effet sur le bras 14, de part et d'autre de la platine 12. Bien entendu, la disposition des galets 108 est prévue de telle sorte que la lame 20 soit dégagée de ses galets lorsqu'elle est détendue sous l'action des moyens 24.

Lorsque la scie 10 selon l'invention est montée dans une cellule de confinement comme c'est le cas dans le mode de réalisation décrit, il peut être nécessaire de prévoir des moyens pour intervenir à distance sur certains organes actifs de la scie. En particulier, les vérins permettant de commander les différents mouvements de la scie sont verrouillés de préférence sur les pièces entre lesquelles ils agissent par des moyens de fixation démontables à distance.

Ainsi, on a déjà vu en se référant à la figure 2 que le corps du vérin 30 repose simplement par gravité sur les plaques 36 de la partie fixe 10a du châssis et que cette tige 30a est fixée par une clavette 38 à la partie mobile 10b.

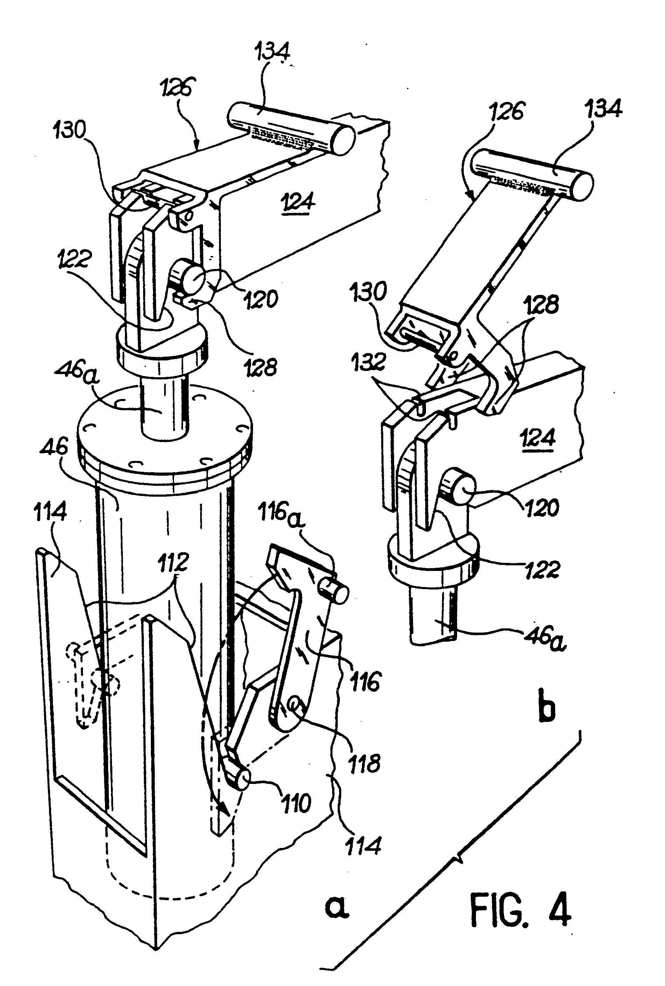

Comme l'illustre en particulier la figure 4, une structure du même type est prévue pour le vérin 46 qui commande le pivotement du support 14 autour de son axe 44, c'est-à-dire en fait le sciage des pièces A.

Ainsi, on voit sur la figure 4a que le corps du vérin 46 porte des tiges radiales 110 qui sont reçues dans des encoches 112 ouvertes vers le haut, formées dans le bord supérieur de deux plaques verticales 114 fixées sur la plaque horizontale 40 de la partie mobile du châssis. Ces plaques 114 portent en outre des leviers 116 qui sont munis de doigts de manoeuvre 116a et pivotent autour d'axes 118, de façon à venir normalement verrouiller les tiges 110 dans le fond des encoches 112 comme on l'a représenté sur la figure 4a. Le pivotement de ces leviers 116 permet de dégager les tiges 110 lorsqu'on souhaite démonter le corps du vérin 46.

De façon comparable, la tige 46a du vérin 46, qui fait saillie verticalement vers le haut à partir du corps de ce vérin, porte à son extrémité des tiges latérales 120 pénètrent dans des encoches 122 ouvertes vers le bas formées dans le rebord inférieur d'une fourche 124 solidaire du support 14.

Comme l'illustrent les figures 4a et 4b, la tige 46a est solidarisée de la fourche 124 au moyen d'une pièce de liaison 126. Cette pièce de liaison 126 est une pièce amovible qui chevauche la fourche 124 et comporte deux pattes 128 repliées en forme de crochet, dont les extrémités viennent se placer en-dessous des tiges 120 pour empêcher celles-ci de s'échapper des encoches 122 lorsque la pièce 126 est montée, comme l'illustre la figure 4a. La pièce 128 comporte de plus une tige horizontale 130 qui vient se loger dans des encoches 132 ouvertes vers le haut formées sur le rebord supérieur de la fourche 124, au-dessus des encoches 122. On comprend que lorsque la tige 130 est en appui dans le fond des encoches 132, comme l'illustre la figure 4a, les extrémités repliées en forme de crochet des pattes 128 appliquent les tiges 120 dans le fond des encoches 122. La pièce 126 comporte en outre une oreille de manutention 134 venant normalement en appui sur la face supérieure de la fourche 124 lorsque la pièce 126 est en place comme l'illustre la figure 4a. Lorsqu'on tire vers le haut sur l'oreille de manutention 134, on fait pivoter la pièce 126 autour de la tige 130, ce qui a pour effet de libérer les tiges 120. La pièce 126 peut alors être retirée comme l'illustre la figure 4b, et la tige 46a du vérin 46 est alors désolidarisée de la fourche 124.

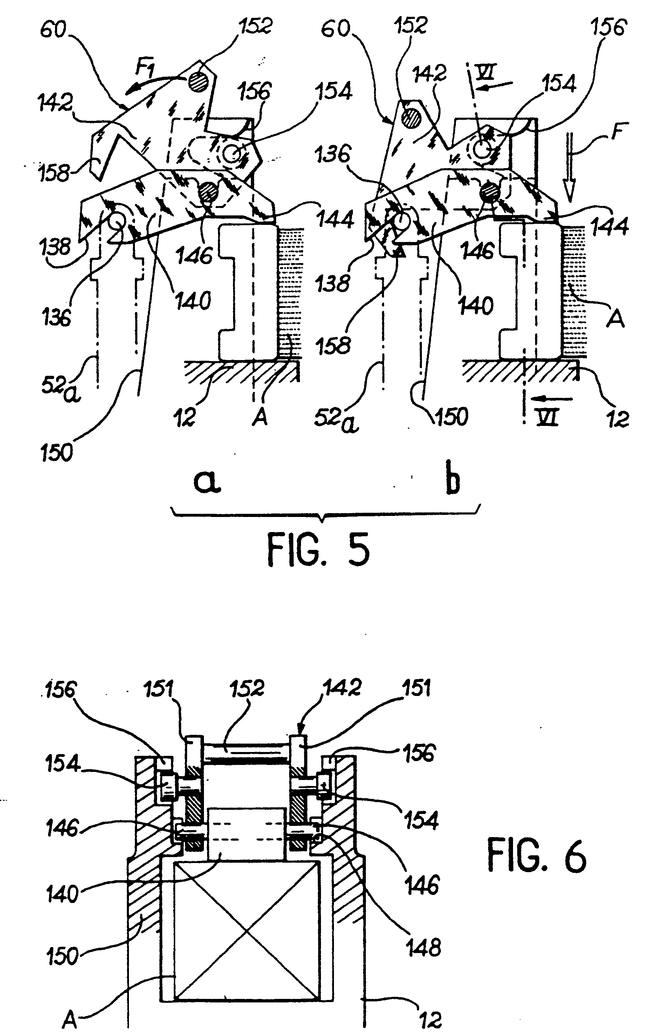

On a déjà vu en se référant à la figure 1 que le corps du vérin 52 comporte des tiges radiales 54 par lesquelles il repose par gravité dans des encouches 56 formées dans les bras 58 servant par ailleurs au supportage de la platine 12. Comme l'illustrent les figures 5 et 6, la tige 52a du vérin 52 peut également être démontée à distance, ainsi que la partie amovible 60 des moyens de blocage.

On voit sur les figures 5a et 5b que la tige 52a, qui fait saillie verticalement vers le haut à partir du corps du vérin 52, porte à son extrémité supérieure des tiges latérales 136 qui viennent normalement en appui dans le fond d'encoches 138 ouvertes vers le bas à l'une des extrémités d'une bride 140 en forme de levier, cette bride constituant avec une tête d'ablocage 142, la partie amovible 60. La bride 140 définit sur sa face inférieure et à son extrémité opposée une butée 144 venant en appui sur la face supérieure de la pièce A à scier. Cette bride 140 pivote autour d'un axe intermédiaire matérialisé par des tiges 146, de telle sorte que, lorsque la tige 52a du vérin est sollicitée vers le haut, la butée 144 se déplace vers le bas pour appliquer la pièce A contre la platine 12 afin de permettre à la lame de scie 20 de scier cette pièce, comme l'illustre la flèche F sur la figure 5b.

Les tiges 146 de la bride 140 définissant l'axe de pivotement de cette dernière sont reçues dans des encoches 148 ouvertes vers le haut formées dans une chape 150 formée par l'extrémité supérieure des bras 58.

Le verrouillage de la liaison entre la tige 52a et la bride 140 et de la liaison entre la bride 140 et la chape 150 est réalisé au moyen de la tête d'ablocage 142. Cette dernière comporte, comme l'illustre la figure 6, deux flasques 151 reliés de façon tournante à la bride 140 par les tiges 146 et reliés entre eux par un axe de manutention 152. Chacun des flasques porte sur sa face externe un galet d'ablocage 154 qui pénètre dans une encoche 156 formée dans la chape 150, au-dessur des encoches 148. Les encoches 156 sont ouvertes du côté de la butée 144 de la bride 140 et leurs bords supérieurs définissent des chemins de roulement pour les galets 154 correspondants, comme l'illustrent en particulier les figures 5a et 5b. Ainsi, on voit sur la figure 5a que la mise en place de la partie amovible 60 s'effectue tout d'abord en mettant en place la bride 140, c'est-à-dire, d'une part, en introduisant les tiges 136 dans les encoches 138 et, d'autre part, en introduisant les tiges 146 dans les encoches 148. Les tiges 146 constituent alors un axe de pivotement pour la tête d'ablocage 142, que l'on fait tourner dans le sens de la flèche $F_1$. Les galets 154 roulent alors sur les chemins de roulement définis par les bords supérieurs des encoches 156, jusqu'à ce que les galets 154 viennent en butée contre le fons de ces encoches. Les galets 154 sont alors décalés du côté de la tige 52a par rapport à l'axe 146, comme l'illustre la figure 5b, de telle sorte qu'ils servent d'appui pour la bride 140 lors de la mise en oeuvre du vérin 52.

Comme l'illustre la figure 5b, la tête d'ablocage 142 sert en outre à verrouiller les tiges 136 dans les encoches 138. A cet effet, chacun des flasques 151 comporte une partie en forme de crochet 158 qui vient plaquer les tiges 136 dans le fond des encoches 138 lorsque la tête 142 est en position de fonctionnement, comme l'illustre la figure 5b.

La configuration qui vient d'être décrite en se référant aux figures 5 et 6 permet à la fois d'effectuer le démontage à distance de la tige du vérin 52 et de rendre interchangeable la partie 60 constituée par la bride 140 et par la tête d'ablocage 142. Cette caractéristique est particulièrement intéressante lorsque les dimensions des pièces A à serrer contre la platine 12 varient. En effet, il est alors facile d'adapter la partie 60 aux dimensions de la pièce à scier A en la remplaçant par une autre partie 60 comportant une bride 140 de dimensions différentes, notamment au niveau de la butée 140.

Enfin, il peut être nécessaire de maintenir les roues 28 de la partie mobile 10b du châssis lorsque le vérin 30 doit être démonté.

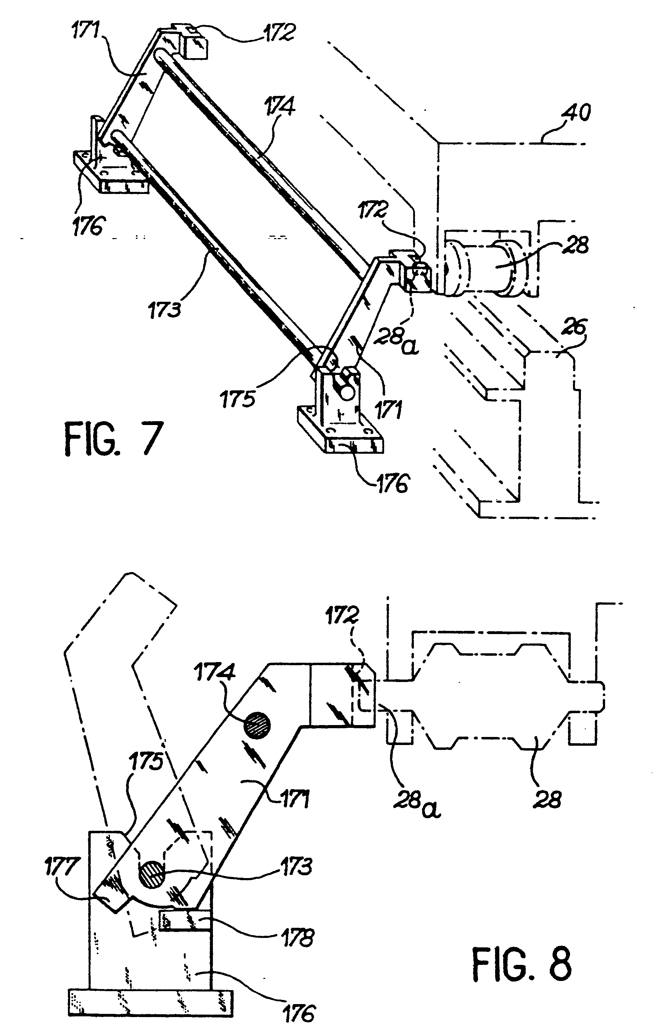

A cet effet, et comme l'illustrent les figures 7 et 8, les axes 28a des galets 28 font saillie audelà des encoches 170, de telle sorte qu'ils peuvent venir s'engager dans des rainures de butée 172 formées dans des organes de maintien 171. Ces organes 171 sont disposés vers l'extérieur des rails 26 par rapport à la partie mobile 10b, et en face de chaque galet 28. Si la partie mobile 10b est supportée par quatre galets 28, à chaque rail est donc associé une paire d'organes de maintien 171 reliés entre eux par un axe de pivotement 173 et par une tige de préhension 174. L'axe de pivotement 173 est reçu à ses extrémités dans des encoches 175 ouvertes vers le haut dans des supports 176 reposant directement sur le sol 12 de la cellue. Comme on l'a représenté en traits mixtes sur la figure 8, les organes de maintien 171 occupent normalement une position dans laquelle les rainures de butée 172 sont dégagées des axes 28a des galets 28. Cette position est déterminée par la venue en appui d'une butée 177 formée sur chaque organe 171 contre une butée 178 formée sur les supports 176. Comme on l'a représenté en traits pleins sur la figure 8 ainsi que sur la figure 7, les organes 171 peuvent être basculés en agissant à distance sur la tige 174, de telle sorte que les rainures 172 viennent coiffer les extrémités des galets 28.

Bien entendu, l'invention n'est pas limitée au mode de réalisation qui vient d'être décrit à titre d'exemple, mais en couvre toutes les variantes. En particulier, si cette invention est particulièrement adaptée aux sciages de pièces en milieu hostile, elle n'est pas limitée à cette application Il en résulte notamment que les moyens d'intervention à distance qui ont été décrits peuvent éventuellement être supprimés ou modifiés sans sortir du cadre de l'invention. De façon comparable, on comprendra que le boîtier supportant la lame de scie pourrait être conçu d'une façon différente de celle qui a été décrite, sans pour autant sortir du cadre de l'invention. Il en va naturellement de même des moyens permettant de tendre cette lame. On remarquera en particulier à ce sujet que les moyens de tension de la lame peuvent agir aussi bien sur la roue menante comme cela a été décrit, que sur une roue menée. Bien entendu, le nombre de roues sur lesquelles est montée la lame peut aussi être supérieure à deux, la forme de la boucle constituée par cette lame ainsi que la forme du boîtier étant bien entendu adaptées au nombre et à la disposition particulière de ces roues.

## Revendications

1. Scie à ruban comprenant une platine (12) supportant la pièce à scier (A), une lame de scie (20) fermée définissant un plan de coupe et supportée par au moins deux roues (16, 18) dont une roue menante (16) entraînée en rotation par des moyens de commande (76), des moyens (44, 46) pour déplacer la lame de scie par rapport à la pièce à scier dans le plan de coupe, et des moyens de tension (24) de la lame permettant de déplacer au moins l'une (16) desdites roues entre une position de tension et une position d'intervention, caractérisée en ce qu'elle comprend de plus, un boîtier amovible (22) dans lequel est logée ladite lame (20), le boîtier et la lame qu'il contient constituant un ensemble (21) pouvant être changé d'un bloc sans aucun autre démontage lorsque les moyens de tension (24) maintiennent ladite roue (16) en position d'intervention.

2. Scie à ruban selon la revendication 1, caractérisée en ce que le boîtier (22) comporte des moyens de retenue (140) de la lame (20) contre lesquels cette dernière est sollicitée élastiquement lorsque ladite roue (16) occupe la position d'intervention, ladite lame étant maintenue écartée de ces moyens de retenue lorsque ladite roue occupe la position de tension.

3. Scie à ruban selon la revendication 2, caractérisée en ce que le boîtier (22) comporte une plaque (96) située du côté de la lame (20) opposé à la denture (20a) de celle-ci, lesdits moyens de retenue comprenant des pattes (104) qui font saillie à partir de ladite plaque, à l'extérieur de la lame de scie, et au-delà de la denture de celle-ci, lesdites pattes comportant des extrémités recourbées vers l'intérieur jusqu'en regard de ladite denture.

4. Scie à ruban selon l'une quelconque des revendications 1 à 3, caractérisée en ce que les roues (16, 18), les moyens de commande (76) ainsi que l'ensemble (21) constitué par le boîtier et par la lame sont portés par un bras (14) monté pivotant sur un châssis (10) portant la platine (12), autour d'une axe (44) perpendiculaire au plan de coupe et décalé par rapport à la pièce à scier (A), et en ce que les moyens (46) pour déplacer la lame de scie (20) par rapport à la pièce à scier agissent entre le bras (14) et le châssis (10) pour commander la rotation du bras autour dudit axe.

5. Scie à ruban selon la revendication 6, caractérisée en ce que les moyens (46) pour déplacer la lame de scie (20) par rapport à la pièce à scier (A) sont démontables et en ce que la scie comprend de plus une béquille (48) apte à supporter le bras (14) lors du démontage de ces moyens.

6. Scie à ruban selon l'une quelconque des revendications 4 et 5, caractérisée en ce que ledit châssis comporte une partie fixe (10a) comprenant des rails (26) s'étendant selon une direction perpendiculaire au plan de coupe, une partie mobile (10b) comprenant des galets (28) roulant sur ces rails, cette partie mobile du châssis portant les roues (16, 18), les moyens de commande (76), l'ensemble (21) constitué par le boîtier et par la lame ainsi que les moyens (46) pour déplacer la lame de scie (20) par rapport à la pièce à scier (A) et des moyens (30) de translation de la partie mobile le long des rails de la partie fixe.

7. Scie à ruban selon la revendication 6, caractérisée en ce que des moyens anti-basculeurs (160) amovibles ont prévus entre les parties fixe et mobile du châssis (10) pour interdire normalement tout déplacement de la partie mobile en éloignement des rails (26).

8. Scie à ruban selon l'une quelconque des revendications précédentes, caractérisée en ce qu'elle comprend de plus des moyens d'ablocage (50) de la pièce à scier (A) aptes à maintenir cette dernière en appui contre ladite platine (12), ces moyens d'ablocage comportant une partie interchangeable (60) adaptée à la géométrie de la pièce à scier.

9. Ensemble prévu pour être utilisé dans une scie à ruban selon la revendication 1, caractérisé en ce qu'il comprend une lame de scie fermée (20) et un boîtier (22) dans lequel est logée ladite lame, ce boîtier comprenant des moyens de retenue (104) de la lame contre lesquels cette dernière est sollicitée élastiquement en l'absence d'une tension de la lame, ces moyens de retenue étant tels que la lame puisse en être écartée lorsqu'elle est mise sous tension.

10. Ensemble selon la revendication 9, caractérisé en ce que le boîtier (22) comprend une plaque (96) située du côté de la lame opposé à la denture de celle-ci, les moyens de retenue comprenant des pattes (104) qui font saillie à partir de ladite plaque, à l'extérieur de la lame de scie (20) et au-delà de la denture (20a) de celle-ci, lesdites pattes comportant des extrémités recourbées vers l'intérieur jusqu'en regard de ladite denture.

**Patentansprüche**

1. Bandsäge mit einer Platte (12) zum Abstützen des zu sägenden Werkstücks (A), einem geschlossenen Sägeband (20), das eine Schneidebene bestimmt und von wenigstens zwei Rädern (16, 18) getragen ist, von denen ein Führungsrad (16) durch Steuereinrichtungen (76) in Drehung versetzt ist, Einrichtungen (44, 46) zum Versetsen des Sägebands gegenüber dem zu sägenden Werkstück in der Schneidebene, und Spanneinrichtungen (24) für das Band, die es erlauben, wenigstens eines (16) der genannten Räder zwischen einer Spannstellung und einer Wartungsstellung zu versetzen, dadurch gekennzeichnet, daß sie weiterhin einen abnehmbaren Behälter (22) enthält, in welchem das genannte Band (20) angeordnet ist, wobei der Behälter und das Band, das er als Bestandteil einer Anordnung (21) enthält, als Block ohne weitere Demontage ausgewechselt werden kann, wenn die Spanneinrichtungen (24) das genannte Rad (16) in der Wartungsstellung halten.

2. Bandsäge nach Anspruch 1, dadurch gekennzeichnet, daß der Behälter (22) Halteeinrichtungen (140) für das Band (20) aufweist, gegen welche letzteres elastisch gedrückt wird, wenn das genannte Rad (16) die Wartungsstellung einnimmt, wobei das genannte Band im Abstand von diesen Halteeinrichtungen gehalten wird, wenn das genannte Rad die Spannstellung einnimmt.

3. Bandsäge nach Anspruch 2, dadurch gekennzeichnet, daß der Behälter (22) eine Platte (96) enthält, die an der Seite des Bandes (20) gegenüber deren Zahnung (20a) angeordnet ist, wobei die Halteeinrichtungen Halteklauen (104) enthalten, die von der genannten Platte gegen die Außenseite des Sägebandes über die Zahnung derselben vorstehen, wobei die genannten Halteklauen Enden aufweisen, die nach innen bis gegenüber die genannte Zahnung gebogen sind.

4. Bandsäge nach einem der Ansprüche 1 bis 3, dadurch gekennzeichnet, daß die Räder (16, 18), die Steuerungseinrichtungen (76) sowie die Anordnung (21), die durch den Behälter und das Band gebildet ist, von einem Arm (14) getragen sind, der schwenkbar auf einem die Platte (12) tragenden Gestell (10) um eine Achse (44) montiert ist, die senkrecht zur Schneidebene verläuft und von dem zu sägenden Werkstück (A) Abstand hat, und daß die Einrichtungen (46) zum Versetzen des Sägebandes (20) gegenüber dem zu sägenden Werkstück zwischen dem Arm (14) und dem Gestell (10) wirken, um die Drehung des Armes um die genannte Achse zu steuern.

5. Bandsäge nach Anspruch 4, dadurch gekennzeichnet, daß die Einrichtungen (46) zum Versetzen des Sägebandes (20) gegenüber dem zu sägenden Werkstück (A) demontierbar sind und daß die Säge darüber hinaus eine Stütze (48) aufweist, die dazu geeignet ist, den Arm (14) bei der Demontage dieser Einrichtungen abzustützen.

6. Bandsäge nach einem der Ansprüche 4 und 5, dadurch gekennzeichnet, daß der genannte Rahmen aufweist: einen festen Teil (10a), der Schienen (26) aufweist, die sich in einer Richtung quer zur Schneidebene erstrecken, einen beweglichen Teil (10b), der Rollen (28) aufweist, die auf diesen Schienen rollen, wobei dieser bewegliche Teil des Rahmens die Räder (16, 18), die Steuereinrichtungen (76), die von dem Behälter und dem Band gebildete Anordnung (21) sowie die Einrichtungen (46) zum Versetzen des Sägebandes (20) gegenüber dem zu sägenden Werkstück (A) trägt, und Einrichtungen (30) zum Verschieben des beweglichen Teils längs der Schienen des festen Teils.

7. Bandsäge nach Anspruch 6, dadurch gekennzeichnet, daß abnehmbare, kippfeste Einrichtungen (160) zwischen dem festen Teil und dem beweglichen Teil des Rahmens (10) vorgesehen sind, um normalerweise jede Verschiebung des beweglichen Teils längs der Schienen (26) zu unterbinden.

8. Bandsäge nach einem der vorhergehenden Ansprüche, dadurch gekennzeichnet, daß sie darüber hinaus Blockiereinrichtungen (50) für das zu sägende Werkstück (A) aufweist, die dazu eingerichtet sind, letzteres in Anlage an der genannten Platte (12) zu halten, wobei die Blockiereinrichtungen einen austauschbaren Teil (60) aufweisen, der an die Geometrie des zu sägenden Werkstücks angepaßt ist.

9. Anordnung, die dazu vorgesehen ist, in einer Bandsäge nach Anspruch 1 verwendet zu werden, dadurch gekennzeichnet, daß sie ein geschlossenes Sägeband (20) und einen Behälter (22) aufweist, in welchem das genannte Band angeordnet ist, wobei dieser Behälter Bandhalteeinrichtungen (104) aufweist, gegen welche letzteres elastisch bei Abwesenheit einer Bandspannung gedrückt wird, wobei diese Halteeinrichtungen derart sind, daß das Band von ihnen einen Abstand hat, wenn es unter Spannung gesetzt ist.

10. Anordnung nach Anspruch 9, dadurch gekennzeichnet, daß der Behälter (22) eine Platte (96) enthält, die auf der Seite des Bandes gegenüber der Zahnung derselben angeordnet ist, wobei die Halteeinrichtungen Klauen (104) enthalten, die von der genannten Platte gegen die Außenseite des Sägebandes (20) und über die Zahnung (20a) desselben vorstehen, wobei die Klauen Enden aufweisen, die nach innen bis gegenüber die genannte Zahnung gebogen sind.

**Claims**

1. Band saw comprising a platen (12) for supporting a workpiece (A) to be cut, an endless-loop saw blade (20) defining a cutting plane and supported on at least two wheels (16, 18), including a driving wheel (16) rotatable by command means (76), means (44, 46) for displacing the saw blade with respect to the workpiece in the cutting plane, and tensioning means (24) for the blade, enabling displacement of at least one (16) of said wheels between a tensioned position and an intervention position, characterised in that it additionally comprises a detachable casing (22) in which the said blade (20) is located, the casing and the blade it contains constituting an assembly (21), changeable as a unit without other dismantling when the tensioning means (24) hold said wheel (16) in the intervention position.

2. Band saw according to claim 1, characterised in that the casing (22) has holding means (104) for the blade (20), against which the latter is elastically urged when said wheel (16) is in the intervention position, said blade being held spaced from said holding means when said wheel is in the tensioned position.

3. Band saw according to claim 2, characterised in that the casing (22) comprises a plate (96) located on the opposite side of the blade (20) from the teeth (20a) of the latter, said holding means comprising clips (104) projecting from said plate outside the saw blade and beyond its teeth, said clips having shaped ends inwardly directed to the level of said teeth.

4. Band saw according to any one of claims 1 to 3, characterised in that the wheels (16, 18) the command means (76), and the assembly constituted by the casing and the blade are carried on an arm (14) pivotally mounted on a frame (10) carrying the platen (12), around an axis (44) perpendicular to the cutting plane and offset with respect to the workpiece (A), and in that the means (46) for displacing the saw blade (20) with respect to the workpiece operate between the arm (14) and the frame (10) to command rotation of the arm around said axis.

5. Band saw according to claim 6, characterised in that the means (46) for displacing the saw blade (20) with respect to the workpiece (A) are detachable, and in that the saw additionally comprises a stay (48) adapted to support the arm (14) during detachment of said means.

6. Band saw according to either of claims 4 and 5, characterised in that said frame has a fixed member (10a) comprising rails (26) extending in a direction perpendicular to the cutting plane, and a movable member (10b) comprising rollers (28) rolling on said rails, said movable member of the frame carrying the wheels (16, 18), the command means (76), the assembly (21) constituted by the casing, the blade and the means (46) for displacing the saw blade (20) with respect to the workpiece (A), and means (30) for conveying the movable member lengthways of the rails of the fixed member.

7. Band saw according to claim 6, characterised in that detachable anti-rocking means (160) are provided between the fixed and movable members of the frame (10), whereby normally to prevent any displacement of the movable member away from the rails (26).

8. Band saw according to any one of the preceding claims, characterised in that it additionally comprises locking means (50) for the workpiece (A), adapted to hold the latter in engagement with said platen (12), said locking means comprising an interchangeable member (60) adapted to the geometry of the workpiece.

9. Assembly provided for utilisation in a band saw according to claim 1, characterised in that it comprises an endless-loop saw blade (20) and a casing (22) in which the blade is located, said casing comprising blade-holding means (104) against which the blade is elastically urged when the blade is not under tension, said blade-holding means being such that the blade is spaced therefrom when it is placed under tension.

10. Assembly according to claim 9, characterised in that the casing (22) comprises a plate (96) located on the opposite side of the blade from its teeth, the holding means comprising clips (104) projecting from said plate outside the saw blade (20) and beyond the teeth (20a) of the latter, said clips having shaped ends inwardly directed to the level of said teeth.

FIG. 1

0 094 881

FIG. 2

FIG. 3

FIG. 4

FIG. 5

FIG. 6

FIG. 7

FIG. 8